(19) Europäisches Patentamt
European Patent Office
Office européen des brevets

(11) **EP 4 535 645 A1**

(12) **EUROPÄISCHE PATENTANMELDUNG**

(43) Veröffentlichungstag:
**09.04.2025 Patentblatt 2025/15**

(21) Anmeldenummer: **23202005.7**

(22) Anmeldetag: **06.10.2023**

(51) Internationale Patentklassifikation (IPC):
**H02P 6/24** (2006.01)     **B25F 5/00** (2006.01)
**H02P 21/36** (2016.01)

(52) Gemeinsame Patentklassifikation (CPC):
**H02P 21/36; B23D 59/001; B25F 5/00; B27B 5/38; B28D 7/005; H02P 6/24;** B28D 1/045

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(71) Anmelder: **Hilti Aktiengesellschaft**
**9494 Schaan (LI)**

(72) Erfinder: **Hurka, Florian**
**86459 Margertshausen (DE)**

(74) Vertreter: **Hilti Aktiengesellschaft**
**Corporate Intellectual Property**
**Feldkircherstrasse 100**
**Postfach 333**
**9494 Schaan (LI)**

(54) **VERFAHREN ZUM BREMSEN EINER WERKZEUGMASCHINE UND WERKZEUGMASCHINE**

(57) Die vorliegende Erfindung betrifft ein Verfahren zum Bremsen einer Werkzeugmaschine, wobei die Werkzeugmaschine eine akkubetriebene Werkzeugmaschine ist, die zur Versorgung mit elektrischer Energie mit einer Energieversorgungsvorrichtung verbunden werden kann. Bei dem Bremsverfahren kann elektrische Energie, die beim Bremsen der Werkzeugmaschine frei wird, in die Energieversorgungsvorrichtung der Werkzeugmaschine zurückgespeist werden, wobei überschüssiger Strom, der über einen zuvor festgelegten Sollwert hinausgeht, im Motor der Werkzeugmaschine vernichtet werden kann. Die Entscheidung darüber, ob die elektrische Energie in die Energieversorgungsvorrichtung zurückgespeist wird oder ob überschüssiger Strom im Motor der Werkzeugmaschine vernichtet wird, kann von einem Regler der Werkzeugmaschine in Abhängigkeit von dem Ergebnis eines Vergleichs zwischen einem Batteriestrom und dem Sollwert getroffen werden. In einem zweiten Aspekt betrifft die Erfindung eine Werkzeugmaschine zur Durchführung des Bremsverfahrens.

Fig. 1

EP 4 535 645 A1

## Beschreibung

Die vorliegende Erfindung betrifft ein Verfahren zum Bremsen einer Werkzeugmaschine, wobei die Werkzeugmaschine eine akkubetriebene Werkzeugmaschine ist, die zur Versorgung mit elektrischer Energie mit einer Energieversorgungsvorrichtung verbunden werden kann. Bei dem Bremsverfahren kann elektrische Energie, die beim Bremsen der Werkzeugmaschine frei wird, in die Energieversorgungsvorrichtung der Werkzeugmaschine zurückgespeist werden, wobei überschüssiger Strom, der über einen zuvor festgelegten Sollwert hinausgeht, im Motor der Werkzeugmaschine vernichtet werden kann. Die Entscheidung darüber, ob die elektrische Energie in die Energieversorgungsvorrichtung zurückgespeist wird oder ob überschüssiger Strom im Motor der Werkzeugmaschine vernichtet wird, kann von einem Regler der Werkzeugmaschine in Abhängigkeit von dem Ergebnis eines Vergleichs zwischen einem Batteriestrom und dem Sollwert getroffen werden. In einem zweiten Aspekt betrifft die Erfindung eine Werkzeugmaschine zur Durchführung des Bremsverfahrens.

## Hintergrund der Erfindung:

Im Bereich der Werkzeugmaschinen ist es bekannt, die Werkzeuge der Werkzeugmaschinen abzubremsen, um eine Arbeit zu beenden oder aus Sicherheitsgründen. Im Stand der Technik sind insbesondere die verschiedene Bremsverfahren bekannt: beispielsweise das Kurzschlussbremsen, das Bremsen mit geschwächtem Magnetfluss, das Flussbremsen oder die Rekuperation, die im Sinne der vorliegenden Erfindung als regeneratives Bremsen bezeichnet wird.

Beim Kurzschlussbremsen wird der Motor der Werkzeugmaschine kurzgeschlossen. Dies kann beispielsweise dadurch erreicht werden, dass alle Lowside-Halbleiter des Motorinverters gleichzeitig eingeschaltet werden. Es kann sich ein anfänglich höherer Anfangskurzschluss-Strom ausbilden, der anschließend in einen Dauerkurzschluss-Strom übergeht. Der Kurschluss-Strom erzeugt im Motor der Werkzeugmaschine ein verzögerndes Moment, d.h. ein Bremsmoment, mit dem die Werkzeugmaschine bzw. ihr Werkzeug abgebremst werden kann. Allerdings nimmt das Bremsmoment beim Kurzschlussbremsen mit sinkender Geschwindigkeit ab. Nachteilig am Kurzschlussbremsen ist darüber hinaus, dass der Nutzer kaum Einfluss auf das Bremsmoment bzw. die Bremszeit hat. Die Höhe des Kurzschluss-Stroms wird lediglich durch Motorparameter bestimmt. Darüber hinaus muss die Elektronik der Werkzeugmaschine den zu Beginn des Kurzschlussbremsens vergleichsweise hohen Anfangs-Kurzschluss-Strom führen können. Wenn die Werkzeugmaschine nicht dafür ausgelegt ist, solche Kurzschluss-Ströme auszuhalten, kann es zu Beschädigungen an der Werkzeugmaschine bzw. ihrer Elektronik kommen.

Nachteilig am Kurzschlussbremsen ist, dass das Kurzschlussbremsen nicht geregelt werden kann. Um ein Bremsmoment zu erzeugen, wird elektrischer Strom benötigt, der allerdings bei sinkender Drehzahl des Motors abnimmt. Bei sehr geringen Drehzahlen kann daher auch kein oder kaum Bremsmoment erzeugt werden. Insbesondere ist mit dem Kurzschlussbremsen ein definiertes und kontrolliertes Abbremsen der Werkzeugmaschine nicht möglich. Darüber hinaus kann mit dem Kurzschlussbremsen auch kein schnelles Abbremsen der Werkzeugmaschine garantiert werden.

Darüber hinaus ist im Stand der Technik das regenerative Bremsen bekannt, bei dem ein Bremsmoment erzeugt wird, das gegen die Drehrichtung des Motors zeigt. Dabei kann kinetische Energie in elektrische Energie umgewandelt und in einen Zwischenkreis der Werkzeugmaschine bzw. ihrer Elektronik zurückgespeist werden.

Das Rekuperieren ist nur dann möglich, wenn rückspeisefähige Energieversorgungsvorrichtungen in der Werkzeugmaschine verwendet werden. Der Motor der Werkzeugmaschine kann beim Rekuperieren geregelt gebremst und dadurch zum Generator werden. Die abgegebene Energie kann in den Zwischenkreis zurückgespeist und von dort in die Energieversorgungsvorrichtungen transferiert werden. Die Güte und das Rekuperationsvermögen der Werkzeugmaschine hängen wesentlich von der in der Werkzeugmaschine verbauten Energieversorgungsvorrichtung ab. Bei Bremsvorgängen, bei denen beispielsweise der Bremsstrom konstant sein soll oder eine Bremsrampe vorgegeben wird, können Betriebszustände auftreten, die die Energieversorgungsvorrichtung so belasten, dass Grenzwerte, die beispielsweise elektrische Eigenschaften der Energieversorgungsvorrichtung, wie Spannung oder Stromtragefähigkeit, betreffen, überschritten werden können. Dadurch können Schäden an der Energieversorgungsvorrichtung auftreten.

Beim regenerativen Bremsen wird die Bremsenergie in den Zwischenkreis zurückgespeist. Dessen Aufnahmevermögen an elektrischer Energie ist allerdings durch seine Kondensatoren begrenzt, die häufig weniger elektrische Energie aufnehmen können, als in den rotierenden oder beweglichen Komponenten der Werkzeugmaschine als kinetische Energie gespeichert ist. Dadurch können die Kondensatoren oder andere Komponenten der Elektronik der Werkzeugmaschine oder der Energieversorgungsvorrichtung beschädigt werden, überhitzen oder sich entzünden. Um das Überschreiten dieser Grenzwerte zu vermeiden, ist bisher im Stand der Technik bekannt, den Bremsvorgang möglichst langsam durchzuführen. Dies ist aber vor allem dann keine gute Idee, wenn ein schnelles Abbremsen der Werkzeugmaschine gewünscht ist, beispielsweise um den Nutzer der Werkzeugmaschine schnell und sicher vor Verletzungen zu bewahren.

Abhilfe haben darüber hinaus in der Vergangenheit Bremschopper gebracht. Bei der Verwendung eines Bremschoppers als Bremswiderstand kann der Motor der Werkzeugmaschine geregelt gebremst werden, so dass er zum Generator wird. Die abgegebene Energie kann in einen Zwischenkreis der Elektronik der Werkzeugmaschine zurückgespeist werden. Obwohl die Verwendung eines Bremschoppers mehr Freiheitsgrade bei der Erreichung bestimmter gewünschter Bremsmomente bzw. Bremszeiten gewährt, besteht ein Nachteil bei der Verwendung eines Bremschoppers darin, dass zumindest ein zusätzliches Hardware-Bauteil in der Werkzeugmaschine verbaut werden muss. Dies erhöht das Gewicht der Werkzeugmaschine und ihr Volumen. Unter einem größeren Volumen kann beispielsweise die Ergonomie bzw. die Handhabbarkeit der Werkzeugmaschine leiden. Häufig zieht der Einbau eines Bremschoppers auch das Erfordernis weiterer zusätzlicher Elektronik-Bauteile, wie MOSFETs, Gatetreiber oder Anschlusslitzen, mit sich, was insbesondere auch die Herstellung bzw. den Zusammenbau der Werkzeugmaschine erschweren kann. Insbesondere dann, wenn der Bremschopper für hohe Pulsleistungen ausgelegt sein soll, können die Kosten für die Werkzeugmaschine, sowie der Bauraumbedarf im Inneren der Werkzeugmaschine erheblich steigen.

Darüber hinaus ist im Stand der Technik das Bremsen mit geschwächtem Magnetfluss bekannt (engl: Flux reduced braking), bei dem der Permanentmagnetfluss des Rotors des Motors der Werkzeugmaschine geschwächt wird. Durch die Schwächung des Permanentmagnetflusses wird eine geringere elektromotorische Gegenkraft erzeugt, so dass weniger elektrische Spannung in den Zwischenkreis aufgenommen wird. Ein solches Verfahren wird beispielsweise in der US 7 135 833 B2 beschrieben.

Nachteilig an dem Bremsen mit geschwächtem Magnetfluss ist es, dass bei der Schwächung des Permanentmagnetflusses je nach Temperatur an den Magneten des Motors der Werkzeugmaschine ein Grenzwert des maximalen Schwächstroms definiert sein muss, wobei die Magnetschwächbarkeit temperaturabhängig ist. Wenn dieser Grenzwert überschritten wird, kann es passieren, dass die Magnete entmagnetisiert werden. Da in realen Systemen die genauen Magnettemperaturen nicht immer bekannt sind, ist häufig ein höher Simulations- bzw. Testaufwand erforderlich, um ein solches Bremsverfahren mit geschwächtem Magnetfluss umzusetzen.

Darüber hinaus ist im Stand der Technik das Flussbremsen bekannt (engl: Flux braking), bei dem der gesamte Fluss, der in die Richtung des Permanentmagnetflusses des Rotors zeigt, verstärkt wird. Solche Flussbremsverfahren werden beispielsweise in der DE 195 09 974 A1 beschrieben.

Die Aufgabe, die der vorliegenden Erfindung zugrunde liegt, besteht darin, die vorstehend beschriebenen Mängel und Nachteile des Standes der Technik zu überwinden und Verfahren zum Abbremsen einer Werkzeugmaschine, sowie eine Werkzeugmaschine bereitzustellen, so dass einerseits ein möglich wirksamer Schutz eines Nutzers der Werkzeugmaschine ermöglicht werden kann, andererseits eine kompakte, handliche Werkzeugmaschine bereitgestellt werden kann. Darüber hinaus soll die freiwerdende Energie möglichst effektiv in die Energieversorgungsvorrichtung zurückgespeist werden, um eine möglichst ressourcenschonende Werkzeugmaschine bereitstellen zu können, die eine gute Akku-Reichweite aufweist. Des Weiteren soll das bereitzustellenden Bremsverfahren geregelt werden können. Darüber hinaus sollen insbesondere die elektronischen Komponenten der Werkzeugmaschine und ihrer Energieversorgungsvorrichtung vor Beschädigungen oder thermischer Überlastung beim Bremsen der Werkzeugmaschine geschützt werden.

Die Aufgabe wird gelöst durch den Gegenstand der unabhängigen Ansprüche. Vorteilhafte Ausführungsformen zu dem Gegenstand der unabhängigen Ansprüche finden sich in den abhängigen Ansprüchen.

**Beschreibung der Erfindung:**

Erfindungsgemäß ist ein Verfahren zum Bremsen einer Werkzeugmaschine vorgesehen, wobei die Werkzeugmaschine eine akkubetriebene Werkzeugmaschine ist, die zur Versorgung mit elektrischer Energie mit einer Energieversorgungsvorrichtung verbunden werden kann. Das Bremsverfahren durch folgende Verfahrensschritte gekennzeichnet:

a) Bremsen der Werkzeugmaschine, wobei elektrische Energie, die beim Bremsen der Werkzeugmaschine frei wird, in die Energieversorgungsvorrichtung der Werkzeugmaschine zurückgespeist werden kann,

b) Festlegung eines Sollwerts I_bat_soll für eine Stromregelung einer Energieversorgungsvorrichtung der Werkzeugmaschine im Bremsfall,

c) Vergleich eines aktuellen Stroms I_bat_ist der Energieversorgungsvorrichtung mit dem Sollwert I_bat_soll,

d) Wenn der aktuelle Strom I_bat_ist der Energieversorgungsvorrichtung kleiner ist als der Sollwert I_bat_soll: Zurückspeisen der elektrischen Energie in die Energieversorgungsvorrichtung,

e) Wenn der aktuelle Strom I_bat_ist der Energieversorgungsvorrichtung größer ist als der Sollwert I_bat_soll: Vernichtung desjenigen Anteils des aktuellen Stroms der Energieversorgungsvorrichtung, der über den Sollwert I_bat_soll hinausgeht («überschüssiger Strom»).

Mit dem vorgeschlagenen Verfahren kann vorteilhafterweise die Reichweite der Energieversorgungsvorrichtung der Werkzeugmaschine erhöht werden. Dies kann insbesondere dadurch erreicht werden, dass elektrische Energie, die beim Bremsen der Werkzeugmaschine frei wird, in die Energieversorgungsvorrichtung der Werkzeugmaschine zurückgespeist wird. Auf diese Weise kann die Energieversorgungsvorrichtung mit der elektrischen Energie, die zuvor in der Trägheit der rotierenden oder beweglichen Komponenten der Werkzeugmaschine enthalten war, aufgeladen werden. Mit anderen Worten kann durch die Erfindung zumindest ein Teil der kinetischen Energie der rotierenden oder beweglichen Komponenten der Werkzeugmaschine wiedergewonnen und zum Aufladen der mindestens einen Energieversorgungsvorrichtung verwendet werden. Ein solches Bremsen wird im Sinne der Erfindung bevorzugt als «regeneratives Bremsen» bezeichnet.

Die Formulierung «kleiner als» in Verfahrensschritt d) ist im Sinne der Erfindung als «kleiner gleich» zu verstehen. Das bedeutet im Sinne der Erfindung bevorzugt, dass elektrische Energie dann in die Energieversorgungsvorrichtung zurückgespeist wird, wenn der aktuelle Strom I_bat_ist der Energieversorgungsvorrichtung kleiner oder gleich dem Sollwert I_bat_soll ist. Die Formulierung «größer als» in Verfahrensschritt e) ist im Sinne der Erfindung ein «echtes» «größer», d.h. es wird derjenige Anteil des aktuellen Stroms der Energieversorgungsvorrichtung vernichtet, der über den Sollwert I_bat_soll hinausgeht, wenn der aktuelle Strom I_bat_ist der Energieversorgungsvorrichtung größer ist als der Sollwert I_bat soll. Dieser über den Sollwert I_bat_soll hinausgehende elektrische Strom bzw. der entsprechende Anteil wird im Sinne der Erfindung bevorzugt als «überschüssiger Strom» bezeichnet.

Ein weiterer Vorteil, der mit dem vorgeschlagenen Bremsverfahren verbunden ist, besteht darin, dass ein schnelleres Abbremsen der Werkzeugmaschine ermöglicht werden kann. Dadurch kann die Werkzeugmaschine in einer kürzeren Bremszeit t abgebremst werden, d.h. die Zeitspanne zwischen Einleitung des Bremsprozesses und dem Stillstand des Werkzeugs der Werkzeugmaschine kann mit der Erfindung erheblich verkürzt werden. Es hat sich gezeigt, dass mit der Erfindung das Bremsverfahren und/oder die Bremszeit eingestellt, d.h. geregelt, werden können. Diese Reglung kann vorzugsweise über den gesamten oder den im Wesentlichen gesamten Drehzahlbereich der Werkzeugmaschine erfolgen. Das bedeutet im Sinne der Erfindung, dass das Bremsverfahren bei unterschiedlichen Drehzahlen des Werkzeugs bzw. des Motors der Werkzeugmaschine kontrolliert bzw. gesteuert werden kann. Diese Steuerung kann beispielsweise automatisch - zum Beispiel mit Hilfe einer Elektronik der Werkzeugmaschine - erfolgen oder durch einen Nutzer der Werkzeugmaschine. Damit wendet sich die Erfindung von dem im Stand der Technik bekannten Kurzschlussbremsen ab, bei dem der Bremsvorgang gerade nicht gesteuert bzw. geregelt werden kann. Vielmehr kann beim Kurzschlussbremsen die Werkzeugmaschine nur dann gebremst werden, wenn eine Drehzahl vorhanden ist, d.h. wenn sich das Werkzeug und/oder der Motor der Werkzeugmaschine drehen. Dies ist mit dem Nachteil verbunden, dass sich die Bremsrampe bzw. der Bremsvorgang nicht oder kaum beeinflussen lassen. Dahingegen ermöglicht es die vorliegende Erfindung, eine Verzögerung bzw. das Bremsen über den ganzen oder den im Wesentlichen ganzen Drehzahlbereich der Werkzeugmaschine einzustellen und/oder zu definieren.

Mit dem Verfahren kann einerseits eine möglichst kurze Bremszeit ermöglicht werden, andererseits eine kompakte, handliche Werkzeugmaschine bereitgestellt werden. Durch die besonders kurze Bremszeit kann der Nutzer der Werkzeugmaschine besonders wirksam vor Verletzungen geschützt werden. Das vorgeschlagene Verfahren ermöglicht vorteilhafterweise eine Rekuperation, d.h. eine Zurückspeisung von elektrischer Energie in eine Energieversorgungsvorrichtung in einer Werkzeugmaschine, mit besonders großer Effizienz.

Es hat sich gezeigt, dass mit dem vorgeschlagenen Bremsverfahren ein besonders schnelles Abbremsen der Werkzeugmaschine ermöglicht werden kann. Die Formulierung «Abbremsen der Werkzeugmaschine» bedeutet im Sinne der Erfindung bevorzugt, dass beispielsweise das Werkzeug und/oder der Motor der Werkzeugmaschine abgebremst werden. Durch das besonders schnelle Abbremsen der Werkzeugmaschine kann der Nutzer der Werkzeugmaschine wirksam geschützt werden. Durch die Kombination von Merkmalen des Flussbremsens mit Merkmalen des regenerativen Bremsens im vorgeschlagenen Bremsverfahren kann vorteilhafterweise eine Bremsverfahren bereitgestellt werden, das geregelt werden kann. Darüber hinaus hat sich gezeigt, dass mit der Erfindung die elektronischen Komponenten der Werkzeugmaschine und ihrer Energieversorgungsvorrichtung besonders wirksam vor Beschädigungen oder thermischer Überlastung beim Bremsen der Werkzeugmaschine geschützt werden können.

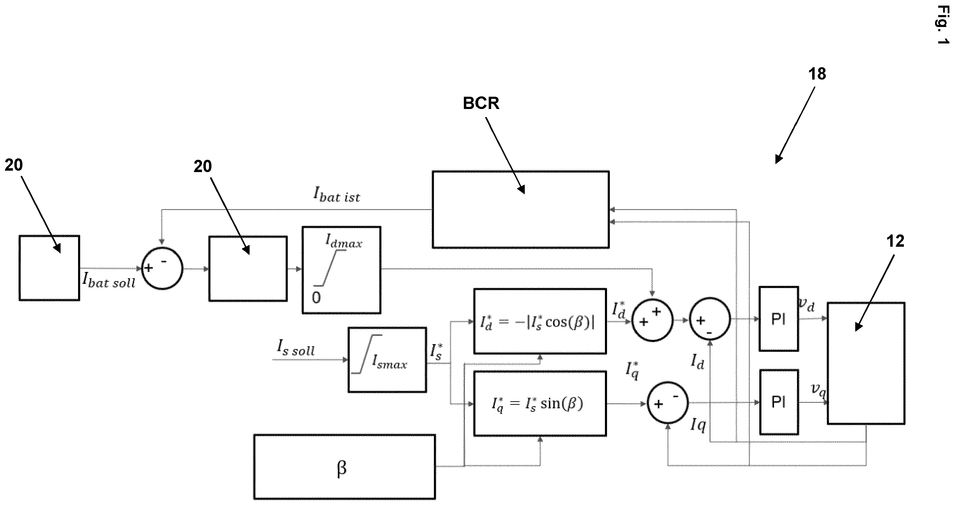

Es ist im Sinne der Erfindung bevorzugt, dass der überschüssige Strom im Motor der Werkzeugmaschine durch Flussbremsen vernichtet wird, wobei das Flussbremsen weiter unten detailliert erläutert wird. Das vorgeschlagene Bremsverfahren stellt vorzugsweise ein batteriestromgeregeltes Flussbrems-Verfahren dar, wobei das in Figur 1 abgebildete Blockschaltbild, das eine mögliche Ausgestaltung des vorgeschlagenen Bremsverfahrens zeigt, in einer feldorientierten Regelung dargestellt ist. Selbstverständlich kann das vorgeschlagene Verfahren auch mit einer Blockkommutierung durchgeführt werden.

Es ist im Sinne der Erfindung bevorzugt, dass der Sollwert I_bat_soll basierend auf einem maximalen Ladestrom der Energieversorgungsvorrichtung festgelegt wird. Vorzugsweise kann der Sollwert I_bat_soll im Wesentlichen frei gewählt werden. Allerdings ist es im Sinne der Erfindung besonders bevorzugt, dass ein Stromwert I_bat_soll ausgewählt wird, der von der Energieversorgungsvorrichtung gut vertragen wird. Das bedeutet im Sinne der Erfindung bevorzugt, dass der Sollwert I_bat_soll für die Stromregelung der Energieversorgungsvorrichtung der Werkzeugmaschine im Bremsfall so ausgewählt wird, dass ein aktueller Strom der Energieversorgungsvorrichtung, der unter dem Sollwert I_bat_soll liegt, von der Energieversorgungsvorrichtung aufgenommen werden kann. Vorzugsweise kann der Sollwert I_bat_soll einen Grenzwert für das Aufnahmevermögen der Energieversorgungsvorrichtung an elektrischer Energie bzw. elektrischen Strom darstellen. Wenn der aktuelle Batteriestrom I_bat_ist unter dem zuvor festgelegten Sollwert liegt, ist die Energieversorgungsvorrichtung weiter in der Lage, elektrische Energie bzw. elektrischen Strom aufzunehmen. Wenn der aktuelle Batteriestrom I_bat_ist über dem zuvor festgelegten Sollwert I_bat_soll liegt, d.h. wenn der aktuelle Strom I_bat_ist der Energieversorgungsvorrichtung größer ist als der Sollwert I_bat_soll, dann ist erfindungsgemäß vorgesehen, dass der überschüssige Strom, d.h. derjenige Anteil des aktuellen Batteriestroms I_bat_ist, der über den Sollwert I_bat_soll hinausgeht, vernichtet wird. Diese Vernichtung des überschüssigen Stroms erfolgt vorzugsweise durch einen Prozess des Flussbremsens. Der Sollwert I_bat_soll gibt somit vorzugsweise die Menge an elektrischer Energie an, die von der Energieversorgungsvorrichtung während des Bremsens der Werkzeugmaschine bzw. ihres Motors aufgenommen werden kann.

Es ist im Sinne der Erfindung ganz besonders bevorzugt, dass der maximale Ladestrom beim Verbinden der Energieversorgungsvorrichtung mit der Werkzeugmaschine von der Elektronik der Werkzeugmaschine ausgelesen werden kann. Der maximale Ladestrom kann im Sinne der Erfindung bevorzugt auch als «maximal zulässiger Ladestrom» bezeichnet werden. Beispielsweise kann ein größerer Akku, der beispielsweise mehr Batteriezellen aufweist, in der Regel mehr elektrische Energie aufnehmen als ein kleinerer Akku, der beispielsweise weniger Batteriezellen aufweist. Es ist im Sinne der Erfindung bevorzugt, dass mit dem Parameter «maximaler Ladestrom» der Sollwert für die Akkustromregelung im Bremsfall bestimmt wird. Das Bremsen der Werkzeugmaschine kann dann vorzugsweise so gestaltet werden, dass am Motor der Werkzeugmaschine die gewünschte Verzögerung entsteht. Es ist im Sinne der Erfindung besonders bevorzugt, dass diese Verzögerung am Rotor des Motors der Werkzeugmaschine entsteht. Dabei kann der maximal zulässige Ladestrom in die Energieversorgungsvorrichtung zurückgespeist werden, während die überschüssige Energie, die beim Bremsen der Werkzeugmaschine frei wird, im Motor der Werkzeugmaschine «verheizt» oder «verbrannt» werden kann. Dieses «Verbrennen» oder «Verheizen» der überschüssigen Energie wird im Sinne der Erfindung bevorzugt als «Vernichtung» der Energie bezeichnet.

Das «Verbrennen» oder «Verheizen» der überschüssigen Energie erfolgt vorzugsweise durch Flussbremsen, wobei die Vernichtung der überschüssigen Energie erfindungsgemäß dann vorgenommen wird, wenn ein aktueller Strom I_bat_ist der Energieversorgungsvorrichtung größer ist als der zuvor festgelegt Sollwert I_bat_soll für die Stromregelung der Energieversorgungsvorrichtung der Werkzeugmaschine im Bremsfall. Wenn der aktuelle Strom I_bat_ist der Energieversorgungsvorrichtung kleine ist als der zuvor festgelegt Sollwert, dann wird die elektrische Energie in die Energieversorgungsvorrichtung im Rahmen des regenerativen Bremsens zurückgespeist.

Es ist im Sinne der Erfindung bevorzugt, dass die Werkzeugmaschine einen Regler aufweist, der dazu eingerichtet ist, das Bremsverfahren in Abhängigkeit von einem Ergebnis des Vergleichs zwischen dem aktuellen Strom I_bat_ist der Energieversorgungsvorrichtung und dem Sollwert I_bat_soll für die Stromregelung der Energieversorgungsvorrichtung der Werkzeugmaschine im Bremsfall zu steuern. Es ist im Sinne der Erfindung bevorzugt, dass der Regler den Vergleich des aktuellen Stroms I_bat_ist mit dem zuvor festgelegten Sollwert I_bat_soll vornimmt und dadurch entscheidet, ob regeneratives Bremsen oder Flussbremsen durchgeführt wird. Die Entscheidung zwischen dem regenerativen Bremsen und dem Flussbremsen erfolgt vorzugsweise in Abhängigkeit davon, ob der Batteriestrom I_bat_ist größer oder kleiner als der vorzugsweise von dem maximalen Ladestrom der Energieversorgungsvorrichtung abhängigen Sollwert I_bat_soll ist. Wenn der Batteriestrom I_bat_ist kleiner als der Sollwert I_bat_soll ist, wird das regenerative Bremsen angewendet und die beim Bremsen der Werkzeugmaschine freiwerdende Energie wird in die Energieversorgungsvorrichtung zurückgespeist. Wenn der Batteriestrom I_bat_ist größer als der Sollwert I_bat_soll ist, wird das Flussbremsen angewendet, bei dem überschüssiger Strom im Motor der Werkzeugmaschine, insbesondere in den Wicklungen des Motors der Werkzeugmaschine, vernichtet wird. Mit anderen Worten ist der Regler dazu eingerichtet, das vorgeschlagene Bremsverfahren in dem Sinne zu steuern, dass der Regler in Abhängigkeit von dem Resultat des Vergleichs von Batteriestrom I_bat_ist und Sollwert I_bat_soll darüber «entscheidet», ob die elektrische Energie, die beim Bremsen der Werkzeugmaschine frei wird, rekuperiert wird oder ob der überschüssige Strom, der über den Sollwert hinausgeht, verbrannt wird. Es ist somit im Sinne der Erfindung bevorzugt, dass der Regler dazu eingerichtet ist, zu «entscheiden», ob elektrische Energie zurück in die Energieversorgungsvorrichtung geschoben wird, um die Energieversorgungsvorrichtung aufzuladen, oder ob überschüssiger Strom in den Motor der Werkzeugmaschine geschoben wird, um dort verheizt zu werden.

Vorzugsweise kann der überschüssige Strom von dem Regler verarbeitet werden, wobei der Regler vorzugsweise als PI-Regler ausgebildet sein kann. Es ist im Sinne der Erfindung bevorzugt, dass die Werkzeugmaschine einen Regler aufweist, der dazu eingerichtet ist, den überschüssigen Strom zu verarbeiten. Es ist im Sinne der Erfindung bevorzugt, dass die Verarbeitung des überschüssigen Stroms durch den Regler nach einem Soll-Ist-Vergleich des aktuellen Stroms der Energieversorgungsvorrichtung mit dem zuvor festgelegten Sollwert erfolgt. Dadurch wird derjenige Strom ermittelt, der aufgrund der physikalisch-technischen Grenzwerte nicht in die Energieversorgungsvorrichtung zurückgespeist werden kann. Dieser Strom entspricht vorzugsweise dem Anteil des aktuellen Stroms der Energieversorgungsvorrichtung, der über den zuvor bestimmten Sollwert für die Stromregelung der Energieversorgungsvorrichtung der Werkzeugmaschine hinausgeht. Mit anderen Worten erfolgt die Verarbeitung des überschüssigen Stroms und seine Vernichtung dann, wenn der aktuelle Strom $I\_bat\_ist$ der Energieversorgungsvorrichtung größer ist als der zuvor bestimmte Sollwert $I\_bat\_soll$. Wenn also Soll-Ist-Vergleich des aktuellen Stroms $I\_bat\_ist$ der Energieversorgungsvorrichtung mit dem zuvor festgelegten Sollwert $I\_bat\_soll$ ergibt, dass der aktuelle Strom $I\_bat\_ist$ größer ist als der Sollwert $I\_bat\_soll$, kann der Überschuss an Strom, d.h. der überschüssige Strom, von einem Regler verarbeitet bzw. durch ein Flussbremsen vernichtet werden. Es ist im Sinne der Erfindung bevorzugt, dass der aktuelle Strom $I\_bat\_ist$ der Energieversorgungsvorrichtung als «Batteriestrom» bezeichnet wird. Die Energieversorgungsvorrichtung kann vorzugsweise auch als Batterie oder Akkumulator («Akku») bezeichnet werden. Der Sollwert $I\_bat\_soll$ für die Stromregelung der Energieversorgungsvorrichtung der Werkzeugmaschine im Bremsfall kann im Sinne der Erfindung bevorzugt auch als «Sollstrom $I\_bat\_ist$» bezeichnet werden.

Es ist im Sinne der Erfindung bevorzugt, dass die Werkzeugmaschine einen Regler umfasst, der dazu eingerichtet ist, das Bremsverfahren so zu steuern, dass lediglich der gewünschte Strom in die Energieversorgungsvorrichtung fliesst. Der Ausdruck «gewünschter Strom» steht dabei für einen elektrischen Strom, der von der Energieversorgungsvorrichtung gut aufgenommen werden kann, so dass die Energieversorgungsvorrichtung durch Aufnahme des «gewünschten Stroms» aufgeladen werden kann. Die überschüssige Energie, d.h. der elektrische Strom, der über den in Abhängigkeit von dem maximalen Ladestrom der Energieversorgungsvorrichtung festgelegten Sollwert hinausgeht, kann in den Wicklungen des Motors der Werkzeugmaschine «verbrannt» werden. Der Regler, der dazu eingerichtet ist, das Bremsverfahren so zu steuern, dass eine solche Strommenge in die Energieversorgungsvorrichtung fliesst, die auch von der Energieversorgungsvorrichtung aufgenommen werden kann, kann vorzugsweise als PI-Regler ausgebildet sein. Es ist im Sinne der Erfindung bevorzugt, dass der Regler Teil der Elektronik der Werkzeugmaschine ist.

Es ist im Sinne der Erfindung bevorzugt, dass die Werkzeugmaschine eine Begrenzungsvorrichtung umfasst, die dazu eingerichtet ist, zu verhindern, dass der Regler arbeitet, wenn elektrische Energie aus der Energieversorgungsvorrichtung der Werkzeugmaschine entnommen wird. Wenn elektrische Energie aus der Energieversorgungsvorrichtung der Werkzeugmaschine entnommen werden soll, bedeutet dies im Sinne der Erfindung bevorzugt, dass die Werkzeugmaschine bzw. ihr Motor und/oder ihr Werkzeug beschleunigt werden soll. Für eine solche Beschleunigung der Werkzeugmaschine ist elektrische Energie erforderlich, die bei akku- oder batteriebetriebenen Werkzeugmaschinen aus der mindestens einen Energieversorgungsvorrichtung entnommen wird. Der Beschleunigungsfall stellt somit vorzugsweise das Gegenteil des Bremsfalls der Werkzeugmaschine dar. Wenn die Werkzeugmaschine einen Regler aufweist, der dazu eingerichtet ist, den überschüssigen Strom zu verarbeiten und/oder das Bremsverfahren zu steuern, ist es im Beschleunigungsfall der Werkzeugmaschine bevorzugt, dass dieser Regler nicht arbeitet. Auf diese Weise wird vermieden, dass elektrische Energie in die Energieversorgungsvorrichtung zurückgespeist wird, obwohl die Werkzeugmaschine beschleunigt werden soll. In einer Blockschaltbilddarstellung des vorgeschlagenen Bremsverfahrens, wie beispielsweise in Figur 1 abgebildet, kann die Begrenzungsvorrichtung als Limitierungsblock dargestellt werden, wobei der Limitierungsblock vorzugsweise dazu eingerichtet ist, zu verhindern, dass der Regler arbeitet, wenn Strom und/oder elektrische Energie aus der Energieversorgungsvorrichtung entnommen werden soll, um die Werkzeugmaschine anzutreiben bzw. zu beschleunigen. Die Begrenzungsvorrichtung kann vorzugsweise Bestandteil der Elektronik der Werkzeugmaschine sein.

Es ist im Sinne der Erfindung bevorzugt, dass das Bremsen der Werkzeugmaschine so gesteuert wird, dass am Motor der Werkzeugmaschine eine gewünschte Verzögerung entsteht. Es ist im Sinne der Erfindung ganz besonders bevorzugt, der Motor der Werkzeugmaschine einen Rotor und einen Stator umfasst, wobei die gewünschte Verzögerung vorzugsweise am Rotor des Motors der Werkzeugmaschine auftritt. Vorzugsweise erfolgt die Steuerung des Bremsvorgangs der vorgeschlagenen Werkzeugmaschine mit Hilfe des Reglers, der dazu eingerichtet ist, den überschüssigen Strom zu verarbeiten.

Es ist im Sinne der Erfindung bevorzugt, dass der überschüssige Strom eine Flußstromkomponente $I\_d$ und eine momentbildende Komponente $I\_q$ aufweisen kann, wobei die Flußstromkomponente $I\_d$ des überschüssigen Stroms im Motor der Werkzeugmaschine vernichtet wird. Vorzugsweise kann die Flußstromkomponente $I\_d$ des überschüssigen Stroms in räumlicher Nähe eines ersten magnetischen Pols mit einer ersten Polung im Motor der Werkzeugmaschine einen zweiten magnetischer Pol mit einer zweiten Polung erzeugen, wobei die erste Polung und die zweite Polung entgegengesetzt sind.

In einem Ausführungsbeispiel der Erfindung kann die Flußstromkomponente I_d des überschüssigen Stroms vor dem Nordpol des Rotors des Motors der Werkzeugmaschine einen Südpol erzeugen, so dass beim Bremsen der Werkzeugmaschine durch diesen resultierenden aus leistungs- und wirkungsgradtechnischer Sicht ungünstigen Zustand ebenfalls Strom bzw. Energie vernichtet werden kann. Es ist im Sinne der Erfindung ganz besonders bevorzugt, dass durch die die Flußstromkomponente I_d des überschüssigen Stroms der Südpol vor dem Rotomordpol auf der Statorseite des Motors der Werkzeugmaschine entsteht. Die Formulierung, dass der Südpol auf der Statorseite des Motors der Werkzeugmaschine vor dem Rotornordpol entsteht, kann im Kontext der vorliegenden Erfindung vorzugsweise damit umschrieben werden, dass der Südpol als Beispiel für einen zweiten magnetischen Pol in räumlicher Nähe zu dem Rotornordpol als Beispiel für einen ersten magnetischen Pol entsteht. Mit anderen Worten kann der erste magnetische Pol von einem Nordpol gebildet werden, während der zweite magnetische Pol von einem Südpol gebildet wird. Selbstverständlich ist auch die umgekehrte Zuordnung möglich. Indem beispielsweise der erste magnetische Pol von einem Nordpol gebildet wird, während der zweite magnetische Pol von einem Südpol gebildet wird, weisen die beiden magnetischen Pol eine entgegengesetzte Polung auf. Mit anderen Worten entsteht durch die Flußstromkomponente I_d des überschüssigen Stroms im Bereich eines Rotorpols mit einer ersten Polung ein magnetischer Pol mit einer zweiten Polung, wobei die Polungen des Rotorpols und des magnetischen Pols entgegengesetzt sind. Es ist im Sinne der Erfindung ganz besonders bevorzugt, dass durch die Flußstromkomponente I_d des überschüssigen Stroms vor dem Rotorpols mit der ersten Polung ein magnetischer Pol mit einer zweiten Polung entsteht, wobei die Polungen des Rotorpols und des magnetischen Pols entgegengesetzt sind. Vorzugsweise bildet sich der magnetische Pol mit der zweiten Polung auf der Statorseite des Motors der Werkzeugmaschine aus. Es ist im Sinne der Erfindung bevorzugt, dass die Flußstromkomponente I_d des überschüssigen Stroms kein Moment erzeugt.

Es stellt einen wesentlichen Vorteil der Erfindung dar, dass mit Hilfe der Flußstromkomponente I_d des überschüssigen Stroms ein zustand hervorgerufen werden kann, der aus leistungs- und wirkungsgradtechnischer Sicht ungünstig ist, wenn er im Normalbetrieb der Werkzeugmaschine auftreten würde. Der ungünstige Zustand besteht insbesondere darin, dass die Flußstromkomponente I_d des überschüssigen Stroms in räumlicher Nähe eines ersten magnetischen Pols mit einer ersten Polung im Motor der Werkzeugmaschine einen zweiten magnetischer Pol mit einer zweiten Polung erzeugt, wobei die erste Polung und die zweite Polung entgegengesetzt sind. Konkret kann dieser ungünstige Zustand beispielsweise dadurch zustande kommen, dass die Flußstromkomponente I_d des überschüssigen Stroms vor dem Rotomordpol auf der Statorseite einen Südpol erzeugt, wobei durch diesen ungünstigen Zustand elektrische Energie vernichtet bzw. elektrischer Strom «verheizt» werden kann. Der Ausdruck «verheizen» ist im Sinne der Erfindung bevorzugt so zu verstehen, dass elektrische Energie in Wärmeenergie oder Wärme umgewandelt wird, wodurch sie üblicherweise für den (Weiter-)Betrieb der Werkzeugmaschine verloren ist, d.h. nicht mehr zur Verfügung steht. Die Erzeugung des zweiten magnetischen Pols in räumlicher Nähe des ersten magnetischen Pols mit umgekehrter Polung stellt vorzugsweise das Flussbremsen dar, das in der englischen Literatur als «flux braking» bezeichnet wird. Es stellt einen wesentlichen Vorteil der Erfindung dar, dass ein Zustand, der aus leistungs- und wirkungsgradtechnischer Sicht eigentlich als ungünstig betrachtet wird, wenn er im normalen Betrieb der Werkzeugmaschine auftritt, umgedeutet und zur Vernichtung von elektrischer Energie und zum Bremsen der Werkzeugmaschine verwendet wird.

Es ist im Sinne der Erfindung bevorzugt, dass beim Flussbremsen der gesamte Fluss oder der im Wesentlichen gesamte Fluss, der in die Richtung des Permanentmagnetflusses des Rotors zeigt, verstärkt wird. Vorzugsweise kann direkt vor dem Nordpol des Rotors mit Strom ein Südpol erzeugt werden, wobei im Kontext der vorliegenden Erfindung die Flußstromkomponente I_d des überschüssigen Stroms verwendet wird, um den Südpol als zweiten Pol zu erzeugen. Vorteilhafterweise trägt der so erzeugte Südpol nicht zur Bildung eines Moments bei. Dadurch kann über den Strom, der zur Erzeugung des Südpols benötigt wird, vorteilhafterweise die generierte Leistung abgebaut werden. Der Wirkungsgrad des Motors der Werkzeugmaschine wird dadurch quasi künstlich verschlechtert, um die Werkzeugmaschine abzubremsen. Auf diese Weise fliesst keine Leistung in den Zwischenkreis zurück.

Ein wesentlicher Vorteil der Erfindung besteht darin, dass das Flussbremsen als Bremsverfahren geregelt ablaufen kann. Dabei kann ein Regler vorgesehen sein, der dazu eingerichtet ist, einen aktuellen Batteriestrom zu erfassen und mit einem Sollwert zu vergleichen. Überschreitet im Bremsfall der aktuelle Batteriestrom einen Schwellwert, verstärkt der Regler so lange den Strom in Richtung des Permanentmagnetflusses, bis der Batteriestrom wieder in einem Bereich ist, der von der Energieversorgungsvorrichtung aufgenommen werden kann. Damit wendet sich das vorgeschlagene Verfahren vom Stand der Technik ab, bei dem häufig Spannungsregler vorgesehen sind, mit denen eine aktuelle Zwischenkreisspannung erfasst werden kann. Überschreitet im Bremsfall die Spannung einen Schwellwert, verstärkt der Regler so lange den Strom in Richtung des Permanentmagnetflusses, bis die Spannung wieder auf dem gewünschten oder ursprünglichen Niveau ist.

Mit der Erfindung können vorteilhafterweise die Vorteile des Flussbremsens mit den Vorteilen des regenerativen Bremsens miteinander kombiniert werden, ohne dass die Nachteile der jeweiligen Verfahren zum Tragen kommen. Der Erfinder hat erkannt, dass mit dem vorgeschlagenen Verfahren der elektrische Strom, der in die Energieversorgungsvorrichtung zurückfließt bzw. zurückgespeist wird, geregelt und aktiv eingestellt werden kann. Darüber hinaus kann vorteilhafterweise ein besonders großes Bremsmoment aufgebaut werden, so dass die Werkzeugmaschine besonders schnell und effizient abgebremst werden kann. Dieser Vorteil wird insbesondere dadurch erreicht, dass die überschüssige Energie, die nicht von der Energieversorgungsvorrichtung aufgenommen werden kann, durch Flussbremsen im Motor der Werkzeugmaschine vernichtet bzw. in Wärmeenergie umgewandelt wird. Es ist im Sinne der Erfindung bevorzugt, dass die Vernichtung der überschüssigen Energie insbesondere auf der Flußstromkomponente I_d erfolgt. Vorzugsweise kann die Flußstromkomponente I_d der überschüssigen Energie als d-Komponente bezeichnet und mit dem Buchstaben «d» indiziert werden, während die momentbildende Komponenten I_q als q-Komponente bezeichnet und mit dem Buchstaben «q» indiziert wird. Es ist im Sinne der Erfindung bevorzugt, dass der Motor der Werkzeugmaschine feldorientiert (field oriented control, FOC) bzw. vektorgeregelt betrieben wird.

Es ist im Sinne der Erfindung darüber hinaus bevorzugt, dass die Flußstromkomponente I_d des überschüssigen Stroms eine Stellgröße bzw. einen Reglerausgang in der Stromregelung der Werkzeugmaschine bzw. der Energieversorgungsvorrichtung darstellt. Vorzugsweise kann der überschüssige Strom von einem Regler, vorzugsweise einem PI-Regler, verarbeitet werden, wobei die Stellgröße bzw. der Reglerausgang des Reglers bzw. des PI-Reglers einen zusätzlichen Motorstrom auf der d-Komponente ergeben kann, der im Sinne der Erfindung als «Flußstromkomponente I_d des überschüssigen Stroms» bezeichnet wird. Es ist im Sinne der Erfindung bevorzugt, dass diese Flußstromkomponente I_d des überschüssigen Stroms zum Verheizen über die Motorwicklung in den Motor eingeprägt und dadurch vernichtet wird. Mit anderen Worten kann es im Sinne der Erfindung bevorzugt sein, dass die Vernichtung des überschüssigen Stroms, insbesondere seiner Flußstromkomponente I_d, durch ein Verheizen bzw. durch ein Einprägen in den Motor der Werkzeugmaschine vernichtet wird.

Es ist im Sinne der Erfindung bevorzugt, dass ein resultierendes Bremsmoment von der momentbildenden Komponente I_q der überschüssigen Energie abhängt. Es ist im Sinne der Erfindung bevorzugt, dass mit dem elektrischen Strom auf der q-Achse geregelt werden kann, wie stark die Werkzeugmaschine abgebremst wird. Beim Bremsen der Werkzeugmaschine kann elektrische Energie oder Strom in einen Zwischenkreis (zurück-)geschoben werden. Vorzugsweise kann dieser Zwischenkreis-Strom gemessen werden. Es kann aber im Sinne der Erfindung auch bevorzugt sein, dass der Zwischenkreis-Strom berechnet werden kann. In dem in Figur 1 dargestellten Ausführungsbeispiel der Erfindung wird die Berechnung des Zwischenkreis-Stroms als «Battery Current Reconstruction» bezeichnet. Beispielsweise kann der Zwischenkreis-Strom basierend auf einer Motorspannung oder anderen Strömen, die in der Werkzeugmaschine auftreten, berechnet werden. In einem Ausführungsbeispiel der Erfindung kann der Zwischenkreis-Strom mit Hilfe des Leistungsgleichgewichts berechnet werden. Das Leistungsgleichgewicht beruht auf der Annahme, dass die Eingangsleistung P_bat der Energieversorgungsvorrichtung im Wesentlichen der bevorzugt dreiphasigen Abgabeleistung P_3phase entspricht. Dabei können Halbleiterverluste vorteilhafterweise über den Wirkungsgrad η berücksichtig werden:

$$\eta \cdot P\_bat = P\_3phase$$

$$P\_bat = (V\_bat) \cdot (I\_bat)$$

$$P\_3phase = 3/2 \cdot (V\_d \cdot I\_d + V\_q \cdot I\_q)$$

Dabei stehen V_d und V_q für Spannungen im feldorientierten Referenzrahmen, während I_d und I_q für Ströme bzw. Stromwerte im feldorientierten Referenzrahmen stehen. I_d steht insbesondere für die Flußstromkomponente des überschüssigen Stroms, während I_q für die momentbildende Komponente der überschüssigen Energie steht. Der Vor- oder Korrekturfaktor 3/2 ist erforderlich, da in der feldorientierten Regelung eine virtuelle Zwei-Phasen-Maschine bzw. ein Zwei-Phasen-Motor verwendet wird. Im Kontext der vorliegenden Erfindung wird ein bevorzugt dreiphasiger Motor in einen dq-Koordinatensystem dargestellt, wobei das dq-Koordinatensystem vorzugsweise zwei Achsen aufweist. Dadurch ergibt sich vorzugsweise der Korrekturfaktor 3/2.

Der Batteriestrom I_bat kann dann mit Hilfe des Wirkungsgrads η und der Spannung V_bat der Energieversorgungsvorrichtung berechnet werden:

$$I\_bat = 3 / (2 \cdot \eta \cdot V\_bat),$$

wobei der Wirkungsgrad η typischerweise Werte in einem Bereich zwischen 95 und 100 % annimmt.

Es ist im Sinne der Erfindung bevorzugt, dass das Bremsmoment dadurch reduziert werden kann, dass Stromregelgrenzen vorgesehen sind, um Komponenten der Werkzeugmaschine und/oder eine Elektronik der Werkzeugmaschine zu schützen. Vorzugsweise können die Stromregelgrenzen angepasst werden, um die Hardware-Komponenten der Werkzeugmaschine oder ihrer Elektronik zu schützen. Bei den Komponenten der Werkzeugmaschine kann es sich insbesondere um eine Energieversorgungsvorrichtung der Werkzeugmaschine, wie eine Batterie oder einen Akkumulator («Akku») handeln. Es ist im Sinne der Erfindung bevorzugt, dass die Stromregelgrenzen dann zum Einsatz kommen, wenn beim Bremsen der Werkzeugmaschine sehr hohe Ströme auftreten, die eine Gefahr für die Komponenten der Werkzeugmaschine und/oder ihrer Elektronik darstellen können. Bei diesen Komponenten kann es sich vorzugsweise um Halbleiter-Elemente oder Halbleiter-Komponenten handeln, die bei zu hohen elektrischen Strömen beschädigt werden können. Wenn der beim Bremsen der Werkzeugmaschine auftretende elektrische Strom zu hoch ist und eine Gefahr für die Hardware-Komponenten der Werkzeugmaschine besteht, kann das Bremsmoment bzw. die Bremskraft vorzugsweise dadurch reduziert werden, dass die Stromregelgrenzen angepasst und insbesondere limitiert werden. Die Stromregelgrenzen können vorzugsweise Bestandteil der Stromregelung der Energieversorgungsvorrichtung der Werkzeugmaschine sein oder im Rahmen dieser Stromregelung vorgegeben werden. Es ist im Sinne der Erfindung bevorzugt, dass die Stromregelgrenzen abgesenkt werden können, um gefährdete Komponenten Werkzeugmaschine und/oder ihrer Elektronik vor Beschädigungen durch zu hohe elektrische Ströme zu schützen.

In einem zweiten Aspekt betrifft die Erfindung eine Werkzeugmaschine zur Durchführung des vorgeschlagenen Verfahrens. Die für das Bremsverfahren eingeführten Begriffe, Definitionen und technischen Vorteile gelten vorzugsweise für die Werkzeugmaschine analog. Der Motor der Werkzeugmaschine ist ein bürstenloser Motor. Es ist im Sinne der Erfindung bevorzugt, dass die Werkzeugmaschine einen Regler aufweist, der dazu eingerichtet ist, das Bremsverfahren in Abhängigkeit von einem Ergebnis des Vergleichs zwischen dem aktuellen Strom I_bat_ist der

Energieversorgungsvorrichtung und dem Sollwert I_bat_soll für die Stromregelung der Energieversorgungsvorrichtung der Werkzeugmaschine im Bremsfall zu steuern. Die Werkzeugmaschine kann darüber hinaus eine Begrenzungsvorrichtung umfassen, die dazu eingerichtet ist, zu verhindern, dass der Regler arbeitet, wenn elektrische Energie aus der Energieversorgungsvorrichtung der Werkzeugmaschine entnommen wird. Es ist im Sinne der Erfindung bevorzugt, dass der Motor der Werkzeugmaschine mit Hilfe einer feldorientierten Regelung oder einer Blockkommutierung regelbar ist.

Mit dem Verfahren ist es vorteilhafterweise möglich, die freiwerdende Bremsenergie besonders effizient in die Energieversorgungsvorrichtung zurückzuspeisen. Es ist im Sinne der Erfindung bevorzugt, dass die Werkzeugmaschine zur Versorgung mit elektrischer Energie mit mindestens einer Energieversorgungsvorrichtung verbindbar ist. Beispielsweise kann die Werkzeugmaschine Aufnahmebereiche bzw. Möglichkeiten zur Ankoppelung von einer, zwei oder mehr Energieversorgungsvorrichtungen, wie Batterien oder Akkumulatoren («Akkus») aufweisen. Es ist im Sinne der Erfindung bevorzugt, dass die Begriffe Akkumulator («Akku»), Batterie und Energieversorgungsvorrichtung synonym verwendet werden.

Es ist im Sinne der Erfindung bevorzugt, dass das Werkzeug der Werkzeugmaschine mit einer Bremszeit von in einem Bereich von 2 bis 4 Sekunden gestoppt wird. Das Abbremsen des Werkzeugs der Werkzeugmaschine mit einer Bremszeit zwischen 2 und 4 Sekunden (s) kann insbesondere die Bauteile und Komponenten im Antriebsstrang der Werkzeugmaschine schonen. Es ist im Sinne der Erfindung bevorzugt, dass das Bremsmoment der Werkzeugmaschine so eingestellt werden kann, dass Bremszeiten zwischen 2 und 4 s erreicht werden können.

Wenn von der Werkzeugmaschine ein Kickback-Ereignis erkannt wird, kann es im Sinne der Erfindung bevorzugt sein, dass das Werkzeug der Werkzeugmaschine mit einer Bremszeit von kleiner als 1,5 Sekunden, bevorzugt kleiner als 1 Sekunde, am meisten bevorzugt kleiner als 0,5 Sekunden gestoppt wird. Auf diese Weise kann das Werkzeug der Werkzeugmaschine so schnell, wie möglich, abgebremst werden, um den Nutzer der Werkzeugmaschine optimal vor Verletzungen zu schützen. Die Formulierung, dass die Werkzeugmaschine oder ihr Werkzeug gestoppt wird, bedeutet im Sinne der Erfindung, dass das Werkzeug der Werkzeugmaschine zum Stillstand gebracht wird. Die Formulierung, dass die Werkzeugmaschine oder ihr Werkzeug gestoppt wird, kann aber im Sinne der Erfindung ebenso gut bedeuten, dass dem Werkzeug ein Großteil seiner Rotationsenergie genommen wird und sich das Werkzeug der Werkzeugmaschine nur noch in einem für den Nutzer weniger gefährlichen Drehzahlbereich weiterdreht. Die Formulierung "Großteil seiner Rotationsenergie" kann im Sinne der Erfindung bevorzugt bedeuten, dass mehr als 50 % der Rotationsenergie des Werkzeugs in eine andere Energieform umgewandelt und/oder in die Energieversorgungsvorrichtung zurückgespeist werden.

Das Abbremsen der Werkzeugmaschine bzw. ihres Werkzeugs erfolgt dabei durch das vorgeschlagene Bremsverfahren, bei dem die Energie, die beim Bremsen der Werkzeugmaschine frei wird, in die Energieversorgungsvorrichtung zurückgespeist wird, wenn ein Batteriestrom unterhalb eines zuvor festgelegten Sollwerts liegt, und wobei der überschüssige Strom im Motor der Werkzeugmaschine vernichtet wird, wenn ein Batteriestrom oberhalb eines zuvor festgelegten Sollwerts liegt. Der Verlust an Rotationsenergie, den das Werkzeug der Werkzeugmaschine durch das Abbremsen erleidet, kann vorteilhafterweise in die Energieversorgungsvorrichtung der Werkzeugmaschine zurückgespeist werden, so dass diese Energie später für die weitere Energieversorgung der Werkzeugmaschine wieder zur Verfügung steht. Mit anderen Worten kann die Energieversorgungsvorrichtung der Werkzeugmaschine durch das vorgeschlagene Bremsverfahren zumindest teilweise wieder aufgeladen werden, in dem Rotationsenergie, die beim Bremsen der Werkzeugmaschine oder ihres Werkzeugs frei wird, in die Energieversorgungsvorrichtung der Werkzeugmaschine zurückgespeist, d.h. rekuperiert wird. Dabei ist es im Sinne der Erfindung ganz besonders bevorzugt, dass das Werkzeug oder die Werkzeugmaschine nicht vollständig gestoppt, d.h. Stillstand gebracht werden müssen, sondern dass dem Werkzeug der Werkzeugmaschine nur ein Großteil seiner Rotationsenergie entzogen bzw. genommen wird. Die Bremszeit t_down endet dann vorzugsweise nicht bei Stillstand des Werkzeugs, sondern wenn die Drehzahl n des Werkzeugs einen Wert von beispielsweise weniger als 30 %, bevorzugt weniger als 25 %, 20 %, 15 %, 10 % oder 5 % der ursprünglichen Drehzahl n_max erreicht hat. Auf die Zeitspanne bis zum tatsächlichen Stillstand des Werkzeugs der Werkzeugmaschine kommt es dann vorteilhafterweise nicht mehr an.

Die Bremszeit t_down, d.h. die Zeitpanne, die die Werkzeugmaschine benötigt, um gestoppt oder zum Stillstand gebracht zu werden, wird von den Zeitwerten t2 und t3 begrenzt. Vorzugsweise beginnt bei der Zeit t2 das Abbremsen der Werkzeugmaschine bzw. ihres Werkzeugs, während das Werkzeug der Werkzeugmaschine bei der Zeit t3 stillsteht. Der Stillstand des Werkzeugs ist vorzugsweise gleichbedeutend damit, dass sich das Werkzeug mit 0 % der ursprünglichen Drehzahl n_max des Werkzeugs dreht.

Wenn von der Werkzeugmaschine ein Kickback-Ereignis erkannt wird, kann es im Sinne der Erfindung bevorzugt sein, dass das Werkzeug der Werkzeugmaschine mit einer Bremszeit von kleiner als 1,5 Sekunden, bevorzugt kleiner als 1 Sekunde, am meisten bevorzugt kleiner als 0,5 Sekunden gestoppt wird, wobei die Bremszeit t_down vorzugsweise nicht nur durch Stillstand des Werkzeugs der Werkzeugmaschine gekennzeichnet sein kann. Vielmehr kann die Bremszeit auch dann enden, wenn das Werkzeug der Werkzeugmaschine mit einer Drehzahl von weniger als 30 %, bevorzugt weniger als 25 %, 20 %, 15 %, 10 % oder 5 % der ursprünglichen Drehzahl n_max des Werkzeugs rotiert.

Der Begriff "Kickback-Ereignis" beschreibt das plötzliche und unerwartete Auftreten einer Kraft zwischen einer Werkzeugmaschine und einem zu bearbeitenden Untergrund. Beispielsweise kann während der Bearbeitung eines Untergrundes durch die Werkzeugmaschine eine unerwartete Bewegung des Werkzeugs der Werkzeugmaschine oder der Werkzeugmaschine selbst erfolgen, durch die eine Gefährdung des Nutzers der Werkzeugmaschine möglich werden kann. Ein solches Kickback-Ereignis kann beispielsweise dann auftreten, wenn sich das Werkzeug der Werkzeugmaschine in dem Untergrund, beispielsweise in einem Schnittspalt, verhakt oder verklemmt. Darüber hinaus kann es zu einem Kickback kommen, wenn der zu bearbeitende Untergrund inhomogene Material-Eigenschaften aufweist, wie zum Beispiels Bewehrungsstangen aus Stahl in Beton, oder wenn ein stumpfes Werkzeug verwendet wird. In all diesen Fällen ist es wünschenswert, dass das Werkzeug der Werkzeugmaschine möglichst schnell gestoppt, d.h. zum Stillstand gebracht, werden kann. Dieses schnelle Abbremsen ermöglicht die Erfindung, indem die Bremszeit nach Erkennen eines Kickback-Ereignisses bei unter 1,5 Sekunden liegt.

Das schnelle Abbremsen des Werkzeugs der Werkzeugmaschine kommt vorzugsweise auch durch das besonders geringe Verhältnis von Brems- zu Beschleunigungszeit von kleiner als 1 zum Ausdruck. Denn es ist im Sinne der Erfindung ganz besonders bevorzugt, dass ein Verhältnis von Bremszeit t_down zu Beschleunigungszeit t_up kleiner als 1 ist. Das bedeutet im Sinne der Erfindung bevorzugt, dass die Bremszeit t_down kleiner ist als die Beschleunigungszeit t_up. Im Fall eines Kickbacks kann das Verhältnis von Bremszeit t_down zu Beschleunigungszeit t_up sogar kleiner als 0,7, besonders bevorzugt kleiner als 0,5 sein. Ein solches Verhältnis von kleiner als 0,5 bedeutet im Sinne der Erfindung bevorzugt, dass die Bremszeit t_down kleiner ist als die Hälfte der Beschleunigungszeit t_up. Der Begriff "Beschleunigungszeit t_up" steht im Sinne der Erfindung bevorzugt für diejenige Zeitspanne, die die Werkzeugmaschine benötigt, um aus dem Stillstand eine maximale Drehzahl n_max zu erreichen. Wenn dem Stillstand der Werkzeugmaschine die Zeit t0 zugeordnet wird und dem erstmaligen Erreichen der maximalen Drehzahl die Zeit t1, so erstreckt sich die Zeitspanne der "Beschleunigungszeit t_up" zwischen den Zeiten t0 und t1. Der Begriff "Bremszeit t_down" steht im Sinne der Erfindung bevorzugt für diejenige Zeitspanne, die die Werkzeugmaschine benötigt, um von dieser maximalen Drehzahl n_max in den Stillstand zu kommen, in dem sich das Werkzeug der Werkzeugmaschine nicht mehr dreht, d.h. die Drehzahl n den Wert "0" annimmt, n = 0 Umdrehungen pro Minute (rounds per minute, rpm). Wenn dem Stillstand der Werkzeugmaschine die Zeit t3 zugeordnet wird und dem Beginn des Abbremsvorgangs die Zeit t2, so erstreckt sich die Zeitspanne "Bremszeit t_down" zwischen den Zeiten t2 und t3. In der Zeitspanne zwischen t1 und t2 kann mit der Werkzeugmaschine gearbeitet werden, beispielsweise indem sie mit unterschiedlichen Drehzahlen betrieben wird. Es ist im Sinne der Erfindung bevorzugt, dass die Werkzeugmaschine zur Einstellung einer Drehzahl einen Drehzahlregler umfasst. Vorzugsweise können die kurzen Bremszeiten im "normalen" Bremsfall und bei Erkennen eines Kickback-Ereignisses durch das vorgeschlagene Bremsverfahren erreicht werden, d.h. indem die in der Werkzeugmaschine gespeicherte Rotationsenergie zum Beispiel in eine Energieversorgungsvorrichtung der Werkzeugmaschine zurückgespeist werden kann und indem die Bremsleistung der Werkzeugmaschine reduziert wird, wenn die Energieversorgungsvorrichtung der Werkzeugmaschine ihre Grenzen für die Aufnahme elektrischer Energie erreicht hat.

Es ist im Sinne der Erfindung bevorzugt, dass das Kickback-Ereignis mit Hilfe einer SensorEinrichtung erkannt wird. Mit anderen Worten kann die Werkzeugmaschine eine SensorEinrichtung umfassen, die dazu eingerichtet ist, Kickback-Ereignisse oder andere Notfälle sicher, schnell und fehlerfrei zu erkennen. Es kann im Sinne der Erfindung auch bevorzugt sein, dass die bestehende bzw. in der Werkzeugmaschine vorhandene Elektronik verwendet wird, um Kickback-Ereignisse zu detektieren. Dazu können beispielsweise Betriebsparameter der Werkzeugmaschine, wie Strom, die Drehzahlen des Motors und/oder der Spindel, Beschleunigungen oder elektrische Energie, über die Informationen in der Werkzeugmaschine bereits vorhanden bzw. bekannt sind, ausgewertet werden, um den Beginn eines Kickback-Ereignisses zu erkennen. Es kann im Sinne der Erfindung auch bevorzugt sein, Erfassungsvorrichtungen, wie Sensoren, an der Werkzeugmaschine vorzusehen, um die genannten Betriebsparameter zu ermitteln und auszuwerten, um Kickback-Ereignisse oder andere Notfälle sicher und schnell zu erkennen.

In einem zweiten Aspekt betrifft die Erfindung eine Werkzeugmaschine zur Durchführung des vorgeschlagenen Verfahrens. Die für das Bremsverfahren eingeführten Begriffe, Definitionen und technischen Vorteile gelten vorzugsweise für die Werkzeugmaschine analog. Der Motor der Werkzeugmaschine ist ein bürstenloser Motor, der vorzugsweise eine Leistung von mehr als 1,8 Kilowatt (kW) abgeben kann. Vorzugsweise kann es sich bei der Werkzeugmaschine um ein bürstenlos gesteuertes Elektrogerät mit Bremsfunktion handeln. Beispielsweise kann die Werkzeugmaschine als elektrisch betriebener Trennschleifer ausgebildet sein. Es ist im Sinne der Erfindung ganz besonders bevorzugt, dass es sich bei der Werkzeugmaschine um einen akkubetriebenen Trennschleifer mit einer Trennscheibe als Werkzeug handelt. Die Werkzeugmaschine kann mit mindestens einer Energieversorgungsvorrichtung verbunden werden, um von der Energieversorgungsvorrichtung mit elektrischer Energie versorgt zu werden. Die mindestens eine Energieversorgungsvorrichtung der Werkzeugmaschine kann beispielsweise eine Spannung von mehr als 20 Volt (V) abgeben. Besonders bevorzugt ist eine Spannung zwischen 21 und 22 V. Die Werkzeugmaschine kann auch zwei oder mehr Energieversorgungsvorrichtungen aufweisen. Wenn die Werkzeugmaschine mehr als eine Energieversorgungsvorrichtung aufweist, kann die elektrische Energie, die beim Abbremsen der Werkzeugmaschine frei wird, in die erste und/oder in die zweite Energieversorgungsvorrichtung zurückgespeist werden. Dieses Rekuperieren kann im Wesentlichen gleichzeitig, nacheinander oder gemäß einem speziell dafür vorgesehenen Algorithmus erfolgen.

Die Trennscheibe stellt ein scheibenförmiges Werkzeug des Trennschleifers dar, das mit dem vorgeschlagenen Bremsverfahren abgebremst und zum Stillstand gebracht werden kann. Die Trennscheibe kann einen Durchmesser aufweisen, der beispielsweise größer als 230 Millimeter (mm) ist. Beispielsweise kann die Trennscheibe Durchmesser von 300 mm, 250 mm oder 400 mm aufweisen, ohne darauf beschränkt zu sein. Ein Gewicht der Trennscheibe kann beispielsweise in einem Bereich zwischen 200 und 2.500 Gramm, d.h. zwischen 0,2 und 2,5 Kilogramm (kg), liegen. Beispielsweise kann das Gewicht der Trennscheibe Werte von 210 Gramm, 530 Gramm, 550 Gramm, 930 Gramm, 1.270 Gramm, 1.280 Gramm, 1.720 Gramm oder 2.450 Gramm annehmen, ohne darauf beschränkt zu sein. Beispielsweise kann es sich bei der Trennscheibe mit eine Diamant-Trennscheibe oder um eine abrasive Trennscheibe mit gebundenen Schleifkörnern handeln. Ein Diamant-Trennscheibe ist vorzugsweise dadurch gekennzeichnet, dass sie einen Stahlkern mit Diamant-Segmenten aufweist.

Weitere Vorteile ergeben sich aus der folgenden Figurenbeschreibung. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert.

Es zeigen:

Fig. 1      Blockschaltbild einer möglichen Ausgestaltung des Bremsverfahrens bzw. Darstellung einer möglichen Funktionsweise der Elektronik der Werkzeugmaschine

Fig. 2      schematische Auftragung der Drehzahl gegen die Zeit zur Verdeutlichung der Brems- und Beschleunigungszeit

Fig. 3      schematische Auftragung der Drehzahl gegen die Zeit zur Verdeutlichung der Brems- und Beschleunigungszeit

Fig. 4      schematische Darstellung einer bevorzugten Ausgestaltung der vorgeschlagenen Werkzeugmaschine

## Ausführungsbeispiele und Figurenbeschreibung:

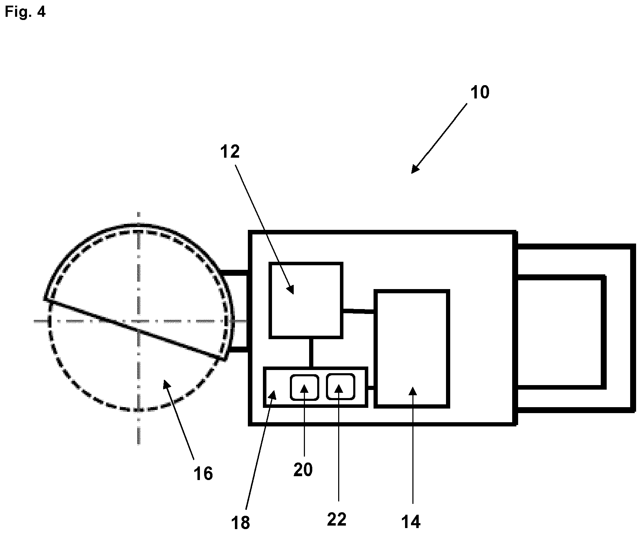

Figur 1 zeigt ein Blockschaltbild einer möglichen Ausgestaltung des Bremsverfahrens bzw. eine Darstellung einer möglichen Funktionsweise der Elektronik 18 der Werkzeugmaschine 10 (siehe insbesondere Figur 4). Figur 1 zeigt dabei das Blockschaltbild einer batteriestromgeregelten Flussbremse, wie sie im Kontext der vorliegenden Erfindung offenbart wird. Die in Figur 1 dargestellte Flussbremse ist als feldorientierte Regelung dargestellt. Selbstverständlich kann das vorgeschlagene Bremsverfahren auch als Blockkommutierung durchgeführt werden.

Dargestellt ist in Figur 1 insbesondere der Motor 12 der Werkzeugmaschine 10, wobei der Motor 12 von der Elektronik 18 die entsprechenden Vorgaben zu Verhalten im Bremsfall erhält. In dem in Figur 1 dargestellten Ausführungsbeispiel der Erfindung weist die Elektronik 18 der Werkzeugmaschine 10 einen Regler 20 auf, der dazu eingerichtet ist, einen Vergleich zwischen einem aktuellen Stromwert $I\_bat\_ist$ der Energieversorgungsvorrichtung 14 (siehe insbesondere Figur 4) und einem zuvor festgelegten Sollwert I_bat soll. Der Batteriestrom I_bat_ist kann durch eine Batterie-Strom-Rekonstruktion BCR ermittelt werden. Das bedeutet im Sinne der Erfindung bevorzugt, dass der Batteriestrom I_bat_ist aus den Motorspannungen und Motorströmen berechnet werden kann. Alternativ kann der Batteriestrom I_bat_ist auch erfasst bzw. gemessen werden. Wenn der Batteriestrom I_bat_ist mittels Batterie-Strom-Rekonstruktion BCR berechnet wird, kann beispielsweise das Leistungsgleichgewicht zugrunde gelegt werden (siehe oben). Der Regler 20 kann vorzugsweise ein PI-Regler sein. Neben dem Regler 20 kann die Werkzeugmaschine 10 bzw. ihre Elektronik 18 eine Reihe von weiteren Reglern aufweisen, die in dem in Figur 1 gezeigten Blockschaltbild mit dem Bezugszeichen PI gekennzeichnet sind.

Unterhalb des Kastens mit der Batterie-Strom-Rekonstruktion BCR ist in Figur 1 der flusserzeugende Strom dargestellt, um elektrische Energie in den Motor 12 der Werkzeugmaschine 10 zu schieben. Dort kann die überschüssige elektrische Energie vernichtet werden, wobei die Energie beispielsweise in den Wicklungen des Motors 12 verheizt werden kann.

Das Sternchen als hochgestellter Index steht im Kontext der vorliegenden Erfindung bevorzugt für Soll-Größen. Dementsprechend stehen die Ausdrücke I*_d und I*_q für die Soll-Ströme in der entsprechenden Richtung - q oder d - des Koordinatensystems bzw. der Raumzeigerdarstellung. Der griechische Buchstabe ω (omega) steht vorzugsweise für die physikalische Größe «Winkelgeschwindigkeit». Der Ausdruck ω* steht vorzugsweise für die Soll-Drehzahl des Motors 12 der Werkzeugmaschine 10. Der Ausdruck I*_bat steht vorzugsweise für den gewünschten Soll-Strom, der im Bremsfall in die Energieversorgungsvorrichtung 14 der Werkzeugmaschine 10 zurückgespeist bzw. rekuperiert werden soll. Der Ausdruck "sat" steht vorzugsweise für einen Begrenzungsblock, der eine *"saturation"* angibt. Der Ausdruck "Ramp" steht vorzugsweise für einen Rampengenerator für die Soll-Drehzahl ω* des Motors 12 der Werkzeugmaschine 10. Mit Hilfe des Rampengenerators "Ramp" kann eine Drehzahl-Rampe gefahren werden, damit auch Werkzeugmaschinen 10 mit einem leistungsstarken Motor 12 von einem Nutzer im Betrieb gehalten werden können. Der griechische Buchstabe υ steht vorzugsweise für eine Spannung in der q- bzw. d-Richtung des Koordinatensystems. Der griechische Buchstabe β steht vorzugsweise für den MTPA-Winkel, wobei 30 ° ein beispielhafter Wert für den MTPA-Winkel β darstellt. Der Ausdruck I_s_max steht vorzugsweise für den maximal zulässigen Stator-Strom. Dieser maximal zulässigen Stator-Strom I_s_max kann vorzugsweise aus den Stromwerten I_q und I_d berechnet werden. Es gilt:

$$I\_s\_max = ((I\_q)^2 + (I\_d)^2))^{0,5}$$

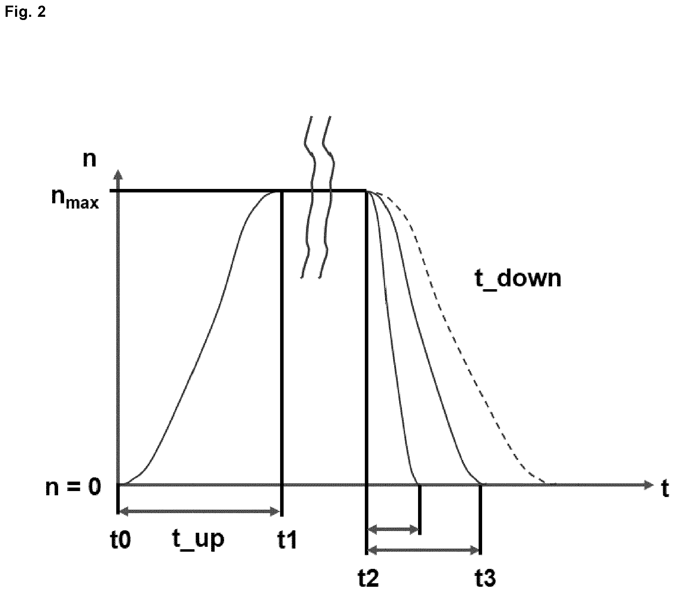

Fig. 2 zeigt eine schematische Auftragung der Drehzahl n des Motors 12 der Werkzeugmaschine 10 gegen die Zeit t zur Verdeutlichung der Bremszeit t_down und der Beschleunigungszeit t_up. Dargestellt ist ein möglicher Verlauf der Drehzahl n mit einer Unterbrechung zwischen den Zeiten t1 und t2. In der Zeitspanne zwischen den Zeiten t0 und t1 steigt die Drehzahl n der Werkzeugmaschine 10 an, um bei der Zeit t1 einen maximalen Wert n_max zu erreichen. Diese Zeitspanne zwischen den Grenzen t1 und t2 wird im Sinne der Erfindung als Beschleunigungszeit t_up bezeichnet. Von dem maximalen Drehzahlwert n_max kann die Werkzeugmaschine 10 durch einen Abbremsvorgang zum Stillstand gebracht werden. Bei konventionell arbeitenden Werkzeugmaschinen kann ein solcher Bremsvorgang gemäß der gestrichelten Linie in Figur 2 erfolgen und beispielsweise länger dauern als die Beschleunigungszeit t_up. Ein Verhältnis aus Bremszeit und Beschleunigungszeit kann in diesem Fall größer als 1 sein, weil die Bremszeit t_down größer ist als die Beschleunigungszeit t_up. Bei der in Figur 2 dargestellten Auftragung der Drehzahl n gegen die Zeit t wird die Bremszeit t_down von den Zeiten t2 und t3 begrenzt.

Gemäß einer bevorzugten Ausgestaltung der Erfindung verläuft das Bremsen der Werkzeugmaschine 10 gemäß der beiden durchgezogenen Linien in Figur 2. Das Abbremsen erfolgt gemäß einem normalen Abbremsvorgang gemäß der rechten durchgezogenen Linie, wobei eine Bremszeit t_down in einem Bereich zwischen 2 und 4 Sekunden liegt. In einem solchen Fall kann das Verhältnis aus Bremszeit und Beschleunigungszeit kleiner als 1 sein, d.h. die Bremszeit t_down ist kleiner als die Beschleunigungszeit t_up. Nach Erkennung eines Kickback-Falls kann die Werkzeugmaschine 10 bzw. ihr Werkzeug 16 in weniger als 1,5 Sekunden abgebremst werden. Ein solcher Schnell- oder Kickback-Bremsvorgang wird durch die linke durchgezogene Linie in Figur 2 dargestellt. In einem solchen Fall kann das Verhältnis aus Bremszeit und Beschleunigungszeit kleiner als 0,7, bevorzugt kleiner als 0,5 sein, d.h. die Bremszeit t_down ist deutlich kleiner als die Beschleunigungszeit t_up. Beispielsweise kann die Bremszeit t_down kleiner als 70 %, bevorzugt kleiner als 50 % der Beschleunigungszeit t_up sein.

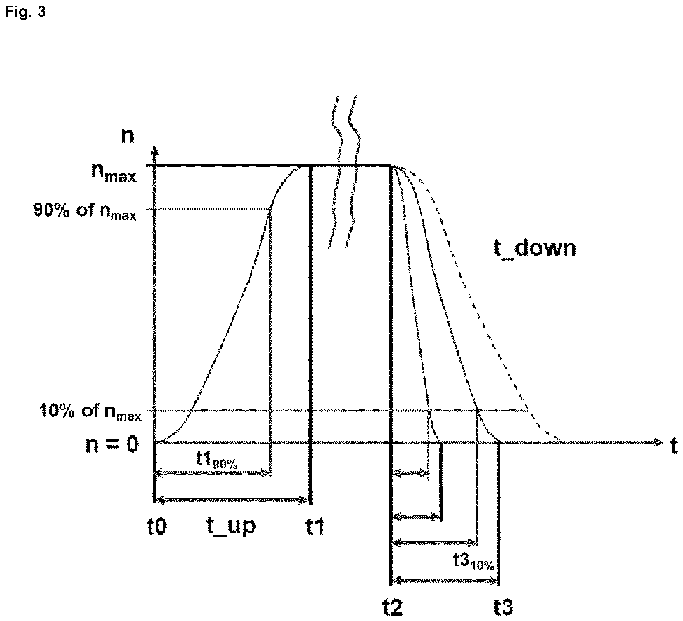

Figur 3 zeigt ebenfalls eine schematische Auftragung der Drehzahl n des Motors 12 der Werkzeugmaschine 10 gegen die Zeit t zur Verdeutlichung der Bremszeit t_down und der Beschleunigungszeit t_up. Die Erfinder haben erkannt, dass mit verringerter Drehzahl die rotierende Trennscheibe 16 nur noch sehr wenig Rotationsenergie hat und daher eine geringe Gefährdung für den Anwender der Werkzeugmaschine 10 darstellt. Es kann daher im Kontext der Erfindung ausreichend sein, dass das Werkzeug 16 der Werkzeugmaschine 10 nicht vollständig zum Stillstand gebracht wird, sondern dass der Bremsvorgang bereits vorher endet, beispielsweise dann, wenn das Werkzeug 16 der Werkzeugmaschine 10 mit einer Drehzahl n von beispielsweise weniger als 30 der ursprünglichen Drehzahl n_max des Werkzeugs 16 rotiert. Das Ende der Bremszeit t_down wird dann entsprechend durch die Endzeit t3_30 festgelegt. Selbstverständlich sind auch alle Zwischenwerte zwischen 30 und 0 % möglich, wie zum Beispiel 27 %, 17,5 %, 13,33 %, 8,56 % usw. Es ist in dieser Ausgestaltung der Erfindung bevorzugt, dass dem Werkzeug 16 der Werkzeugmaschine 10 der größere Teil seiner Rotationsenergie entzogen und in die Energieversorgungsvorrichtung 14 der Werkzeugmaschine 10 zurückgespeist wird. Durch die Wegnahme des Großteils der Rotationsenergie kann das Werkzeug 16 der Werkzeugmaschine 10 bereits so stark abgebremst werden, dass die rotierende Trennscheibe 16 keine Gefahr mehr für den Nutzer der Werkzeugmaschine 10 darstellt. Wenn die Bremszeit t_down nicht erst bei Stillstand des Werkzeugs 16 der Werkzeugmaschine 10 endet, sondern bereits dann, wenn sich das Werkzeug 16 der Werkzeugmaschine 10 beispielsweise nur noch mit weniger als 30 % der ursprünglichen Drehzahl n_max des Werkzeugs 16 dreht, dann kommt es vorteilhafterweise auf die Zeitspanne bis zum tatsächlichen Stillstand des Werkzeugs der Werkzeugmaschine nicht mehr an, denn die Bremszeit t_down bzw. deren Endpunkt t3 wird durch das Erreichen der geringeren Drehzahl festgelegt.

Es kann im Sinne der Erfindung auch bevorzugt sein, dass die Werkzeugmaschine 10 oder ihr Werkzeug 16 mit einem reduzierten Gradienten mit einer anderen Steigung zum Stillstand gebracht wird.

In der in Figur 3 dargestellten Auftragung der Drehzahl n gegen die Zeit t sind insbesondere konstante Geraden für die Werte von 90 % der maximalen Drehzahl n_max und 10 % der maximalen Drehzahl n_max eingezeichnet. Der Wert von 90 % der maximalen Drehzahl n_max bildet zusammen mit dem zugehörigen Zeitwert t1_90% ein Wertepaar, dass auf den Graphen n(t) liegt. In analogerweise bildet der Wert von 10 % der maximalen Drehzahl n_max bildet zusammen mit dem zugehörigen Zeitwert t3_10% ein Wertepaar, dass auf den Graphen n(t) liegt.

Figur 4 zeigt eine schematische Darstellung einer bevorzugten Ausgestaltung der vorgeschlagenen Werkzeugmaschine 10. Die Werkzeugmaschine 10 weist einen Motor 12 auf, der vorzugsweise als bürstenloser Motor ausgebildet ist. Die Werkzeugmaschine 10 kann ein Werkzeug 16 aufweisen, das beispielsweise als scheibenförmiges Schneidwerkzeug ausgebildet sein kann. Bei der in Figur 4 abgebildeten Werkzeugmaschine 10 handelt es sich vorzugsweise um einen Trennschleifer, mit dem Schnitte in einen Untergrund, wie Beton, eingebracht werden können. Das Werkzeug 16 der Werkzeugmaschine 10 kann von einem Blattschutz (ohne Bezugszeichen) umgeben sein, um den Nutzer der Werkzeugmaschine 10 vor Späne- und Funkenflug zu schützen. Die Werkzeugmaschine 10 kann mit mindestens einer Energieversorgungsvorrichtung 14 verbunden werden, um die Werkzeugmaschine 10 mit elektrischer Energie zu versorgen. Selbstverständlich kann die Werkzeugmaschine 10 auch zwei oder mehr Energieversorgungsvorrichtungen 14 aufweisen. Im Kontext der vorliegenden Erfindung kann elektrische Energie in die mindestens eine Energieversorgungsvorrichtung 14 zurückgespeist werden, dies insbesondere dann, wenn die Werkzeugmaschine 10 abgebremst wird. Die Werkzeugmaschine 10 kann darüber hinaus einen oder mehrere Handgriffe (ohne Bezugszeichen) aufweisen, mit denen der Nutzer der Werkzeugmaschine 10 die Werkzeugmaschine 10 transportieren oder bei der Arbeit führen kann.

Die Werkzeugmaschine 10, die in Figur 4 dargestellt ist, weist eine Elektronik 18, die über Leitungsmittel (ohne Bezugszeichen) mit dem Motor 12 und der Energieversorgungsvorrichtungen 14 verbunden vorliegt. Mit den Leitungsmitteln können Daten, elektrischer Signale oder elektrische Energie zwischen der Elektronik 18, dem Motor 12 und/oder der Energieversorgungsvorrichtungen 14 der Werkzeugmaschine 10 ausgetauscht werden. Die Elektronik 18 kann einen Regler 20 aufweisen, mit dem das vorgeschlagene Bremsverfahren gesteuert werden kann. Darüber hinaus kann die Elektronik 18 der Werkzeugmaschine 10 eine Begrenzungsvorrichtung 22 aufweisen, mit der verhindert werden kann, dass der Regler 20 arbeitet, wenn elektrische Energie aus der Energieversorgungsvorrichtung 14 der Werkzeugmaschine 10 entnommen wird, um die Werkzeugmaschine 10, ihr Werkzeug 16 oder den Motor 12 zu beschleunigen.

## Bezugszeichenliste

| | |
|---|---|
| 10 | Werkzeugmaschine |
| 12 | Motor |
| 14 | Energieversorgungsvorrichtung |
| 16 | Werkzeug |
| 18 | Elektronik |
| 20 | Regler |
| 22 | Begrenzungsvorrichtung |
| PI | weitere Regler, insbesondere PI-Regler |
| BCR | Battery Current Reconstruction |
| I_bat_ist | aktueller Strom der Energieversorgungsvorrichtung, Batteriestrom |
| I_bat_soll | Sollwert für den Batteriestrom |
| I*_d | Soll-Strom in d-Richtung |
| I*_q | Soll-Strom in q-Richtung |
| ω (omega) | Winkelgeschwindigkeit |
| ω* | Soll-Drehzahl des Motors |
| I*_bat | gewünschter Soll-Strom, der im Bremsfall in die Energieversorgungs vorrichtung zurückgespeist wird |
| sat | Begrenzungsblock |
| Ramp | Rampen-Generator |
| υ | Spannung |
| β | MTPA-Winkel |
| I_s_max | maximal zulässiger Stator-Strom. |

**Patentansprüche**

1. Verfahren zum Bremsen einer Werkzeugmaschine (10), wobei die Werkzeugmaschine (10) eine akkubetriebene Werkzeugmaschine ist, die zur Versorgung mit elektrischer Energie mit einer Energieversorgungsvorrichtung (14) verbunden werden kann, **gekennzeichnet durch die folgenden Verfahrensschritte:**

   a) Bremsen der Werkzeugmaschine (10), wobei elektrische Energie, die beim Bremsen der Werkzeugmaschine (10) frei wird, in die Energieversorgungsvorrichtung (14) der Werkzeugmaschine (10) zurückgespeist werden kann,
   b) Festlegung eines Sollwerts I_bat_soll für eine Stromregelung einer Energieversorgungsvorrichtung (14) der Werkzeugmaschine (10) im Bremsfall,
   c) Vergleich eines aktuellen Stroms I_bat_ist der Energieversorgungsvorrichtung (14) mit dem Sollwert I_bat soll,
   d) Wenn der aktuellen Strom I_bat_ist der Energieversorgungsvorrichtung (14) kleiner ist als der Sollwert I_bat_soll: Zurückspeisen der elektrischen Energie in die Energieversorgungsvorrichtung (14),
   e) Wenn der aktuelle Strom I_bat_ist der Energieversorgungsvorrichtung (14) größer ist als der Sollwert I_bat_soll: Vernichtung desjenigen Anteils des aktuellen Stroms I_bat_ist der Energieversorgungsvorrichtung (14), der über den Sollwert I_bat_soll hinausgeht.

2. Verfahren nach Anspruch 1, **dadurch gekennzeichnet, dass** der überschüssige Strom im Motor (12) der Werkzeugmaschine (10) durch Flussbremsen vernichtet wird.

3. Verfahren nach Anspruch 1 oder 2 **dadurch gekennzeichnet, dass** der Sollwert I_bat_soll basierend auf einem maximalen Ladestrom der Energieversorgungsvorrichtung (14) festgelegt wird.

4. Verfahren nach einem der vorhergehenden Ansprüche **dadurch gekennzeichnet, dass** die Werkzeugmaschine (10) einen Regler (20) aufweist, um das Bremsverfahren in Abhängigkeit von einem Ergebnis des Vergleichs zwischen dem aktuellen Strom I_bat ist der Energieversorgungsvorrichtung (14) und dem Sollwert I_bat_soll für die Stromregelung der Energieversorgungsvorrichtung (14) der Werkzeugmaschine (10) im Bremsfall zu steuern.

5. Verfahren nach Anspruch 4 **dadurch gekennzeichnet, dass** die Werkzeugmaschine (10) eine Begrenzungsvorrichtung (22) umfasst, um zu verhindern, dass der Regler (20) arbeitet, wenn elektrische Energie aus der Energieversorgungsvorrichtung (14) der Werkzeugmaschine (10) entnommen wird.

6. Verfahren nach einem der vorhergehenden Ansprüche **dadurch gekennzeichnet, dass** der überschüssige Strom eine Flußstromkomponente I_d und eine momentbildende Komponente I_q aufweisen kann, wobei die Flußstromkomponente I_d des überschüssigen Stroms im Motor (12) der Werkzeugmaschine (10) vernichtet wird.

7. Verfahren nach einem der vorhergehenden Ansprüche **dadurch gekennzeichnet, dass** die Flußstromkomponente I_d des überschüssigen Stroms in räumlicher Nähe eines ersten magnetischen Pols mit einer ersten Polung im Motor (12) der Werkzeugmaschine (10) einen zweiten magnetischer Pol mit einer zweiten Polung erzeugt, wobei die erste Polung und die zweite Polung entgegengesetzt sind.

8. Verfahren nach einem der vorhergehenden Ansprüche **dadurch gekennzeichnet, dass** ein resultierendes Bremsmoment von der momentbildenden Komponente I_q der überschüssigen Energie abhängt.

9. Verfahren nach Anspruch 8 **dadurch gekennzeichnet, dass** das Bremsmoment dadurch reduziert werden kann, dass Stromregelgrenzen vorgesehen sind, um Komponenten der Werkzeugmaschine (10) und/oder eine Elektronik (18) der Werkzeugmaschine (10) zu schützen.

10. Werkzeugmaschine (10) zur Durchführung des Verfahrens nach einem der vorhergehenden Ansprüche **dadurch gekennzeichnet, dass** ein Motor (12) der Werkzeugmaschine (10) ein bürstenloser Motor ist.

11. Werkzeugmaschine (10) nach Anspruch 10 **dadurch gekennzeichnet, dass** die Werkzeugmaschine (10) einen Regler (20) aufweist, der dazu eingerichtet ist, das Bremsverfahren in Abhängigkeit von einem Ergebnis des Vergleichs zwischen dem aktuellen Strom I_bat_ist der Energieversorgungsvorrichtung (14) und dem Sollwert I_bat_soll für die Stromregelung der Energieversorgungsvorrichtung (14) der Werkzeugmaschine (10) im Bremsfall zu steuern.

12. Werkzeugmaschine (10) nach Anspruch 11
**dadurch gekennzeichnet, dass**
die Werkzeugmaschine (10) eine Begrenzungsvorrichtung (22) umfasst, die dazu eingerichtet ist, zu verhindern, dass der Regler (20) arbeitet, wenn elektrische Energie aus der Energieversorgungsvorrichtung (14) der Werkzeugmaschine (10) entnommen wird.

13. Werkzeugmaschine (10) nach einem der Ansprüche 10 bis 12
**dadurch gekennzeichnet, dass**
der Motor (12) der Werkzeugmaschine (10) mit Hilfe einer feldorientierten Regelung oder einer Blockkommutierung regelbar ist.

Fig. 1

**Fig. 2**

**Fig. 3**

**Fig. 4**

**EP 4 535 645 A1**

# EUROPÄISCHER RECHERCHENBERICHT

Nummer der Anmeldung

**EP 23 20 2005**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 4 087 115 A1 (STIHL AG & CO KG ANDREAS [DE]) 9. November 2022 (2022-11-09) * Absätze [0001], [0008], [0012], [0014], [0023], [0024]; Ansprüche 1,2 * ----- | 1-13 | INV. H02P6/24 B25F5/00 H02P21/36 |
| A | CN 114 244 235 A (UNIV HANGZHOU DIANZI) 25. März 2022 (2022-03-25) * Zusammenfassung * ----- | 1-13 | |
| A | US 2018/013360 A1 (ESHLEMAN SCOTT J [US] ET AL) 11. Januar 2018 (2018-01-11) * Absatz [0062] * ----- | 1-13 | |
| A | US 5 532 568 A (HUTTUNEN ARI [FI]) 2. Juli 1996 (1996-07-02) * Anspruch 1; Abbildung 2 * ----- | 1-13 | |
| | | | RECHERCHIERTE SACHGEBIETE (IPC) |
| | | | H02P B25H B25F |

Der vorliegende Recherchenbericht wurde für alle Patentansprüche erstellt

| Recherchenort | Abschlußdatum der Recherche | Prüfer |
|---|---|---|
| München | 22. Februar 2024 | Schneider, Gernot |

**EP 4 535 645 A1**

## ANHANG ZUM EUROPÄISCHEN RECHERCHENBERICHT
## ÜBER DIE EUROPÄISCHE PATENTANMELDUNG NR.

EP 23 20 2005

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

22-02-2024

| Im Recherchenbericht angeführtes Patentdokument | Datum der Veröffentlichung | Mitglied(er) der Patentfamilie | Datum der Veröffentlichung |
|---|---|---|---|
| EP 4087115 A1 | 09-11-2022 | KEINE | |
| CN 114244235 A | 25-03-2022 | KEINE | |
| US 2018013360 A1 | 11-01-2018 | EP 3267574 A1 | 10-01-2018 |
| | | US 2018013360 A1 | 11-01-2018 |
| US 5532568 A | 02-07-1996 | DE 19509974 A1 | 09-11-1995 |
| | | FI 941404 A | 26-09-1995 |
| | | FR 2717965 A1 | 29-09-1995 |
| | | GB 2287844 A | 27-09-1995 |
| | | IT 1280826 B1 | 11-02-1998 |
| | | JP H07298662 A | 10-11-1995 |
| | | JP 2002199770 A | 12-07-2002 |
| | | US 5532568 A | 02-07-1996 |

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 7135833 B2

- DE 19509974 A1